# EUROPEAN PATENT SPECIFICATION

(11) **EP 0 741 512 B1**
(45) Date of publication and mention of the grant of the patent: **20.12.2000**
(21) Application number: 95935599.1
(22) Date of filing: 09.10.1995
(51) Int. Cl.: A01J 5/017

(54) **A METHOD OF AND AN IMPLEMENT FOR AUTOMATICALLY MILKING ANIMALS, SUCH AS COWS**
VERFAHREN UND GERÄT ZUM AUTOMATISCHEN MELKEN VON TIEREN SOWIE KÜHEN
PROCEDE ET OUTIL POUR LA TRAITE AUTOMATIQUE D'UN ANIMAL TEL QU'UNE VACHE

(30) Priority: 12.10.1994 NL 9401681
(43) Date of publication of application: 13.11.1996
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: PCT/NL95/00343
(87) International publication number: WO 96/11568

(56) References cited:
- EP-A- 0 222 574
- EP-A- 0 536 836
- EP-A- 0 574 089
- NL-A- 8 602 505

## Description

The present invention relates to a method of milking animals, such as cows, whereby, by means of a milking robot, at least one teat cup is connected to a teat of an animal to be milked.

Such method is known from EP-A-0 536 836.

In this document there is described a milking robot with the aid of which teat cups can be connected to the teats of an animal. After the animal has been milked, the teat cups are cleaned in a separate cleaning apparatus.

The foremilk obtained with the teat cups, i.e. the squirts of milk being the first ones obtained by means of the teat cup, is thus mixed with the milk obtained subsequently with a teat cup and jointly stored in a milk tank. It is generally known that especially the foremilk of some animals can have a high germ count. Mixing the foremilk with the other milk is undesirable, because this results eventually in milk of a lower quality.

The present invention has for its objective to provide a method as mentioned above, by which it is feasible to obtain milk of high purity and quality.

According to the invention, this is achieved through the method step as defined in the characterizing part of claim 1.

From document NL-A-8602505 it is known to separate milk which is infected from milk which is not infected. In order to establish whether milk is infected or not, samples of milk are taken and analyzed.

According to an embodiment of the invention, a method is adopted, by means of which, after foremilking, the teat cup is disconnected and cleaned, whereupon the teat cup is reconnected to the teat and the corresponding udder quarter is milked (out), after which the teat cup is cleaned again. In particular, the reconnection of the teat cup to the teat, can take place by means of the milking robot; after milking out the relevant udder quarter, the teat cup is preferably cleaned again before it is connected anew to a teat by means of the milking robot. Owing to the fact that by the above method the teat cups, and possibly the milk lines, are purged of the remnants of foremilk, it is prevented that any mixture of foremilk and milk obtained subsequently takes place, which increases the purity and, connected herewith, the quality of the milk suitable for consumption. Owing to the fact that upon milking (out) the udder quarter, i.e. upon completion of the milking, the teat cup is first cleaned before it is anew connected to a different teat, it is prevented that remnants of milk from one animal come into contact with the teats of any other animal; for this could cause that diseases are carried from one animal to the other. By adopting a method, according to an embodiment of the invention, by which the teat cup is cleaned immediately upon termination of the milking, the remnants of milk of the relevant milking are also prevented from decaying and subsequently coming possibly into contact with the teats of a next animal to be milked. According to an embodiment of the invention, a method is adopted, by which the foremilk and the milk suitable for consumption are discharged into separate tanks.

The invention will now be further explained with reference to the accompanying drawings, in which:
Figure 1 is a plan view of an implement for milking animals, which implement is provided with a milking robot having on each longitudinal side a gripper for seizing the teat cups;
Figure 2 shows a side view of the implement for milking animals according to Figure 1, in which view the means of transport keeping the teat cups during travel in an upright attitude are clearly discernible;
Figure 3 shows a rear view of the milking parlour in accordance with line III-III in Figure 1, and
Figure 4 also is a rear view of the milking parlour in operation, showing the teat cup cleaners and the pivot-mounted milk and pulsation tubes.

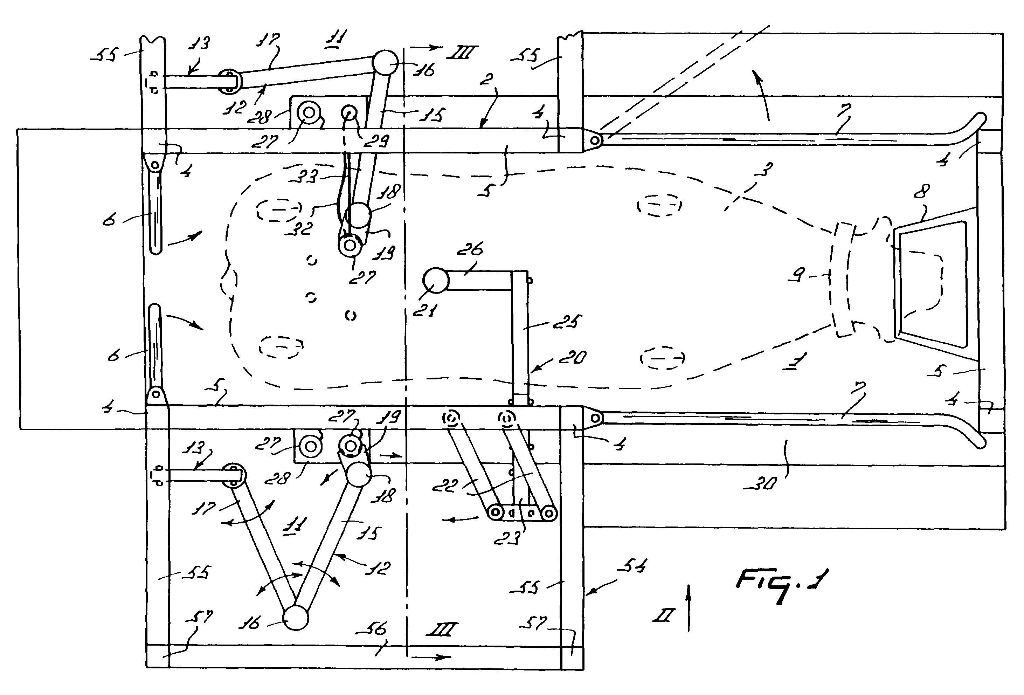

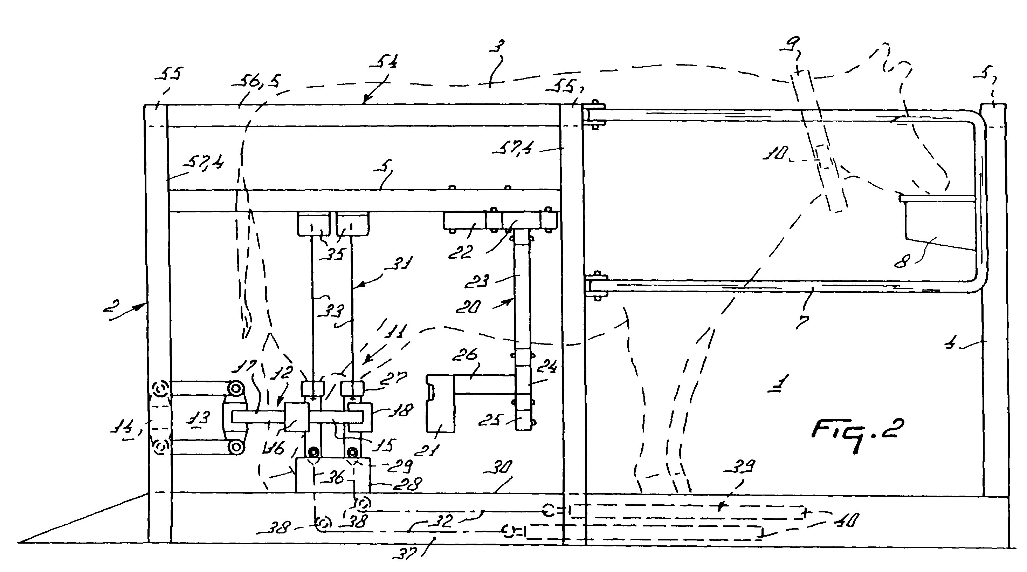

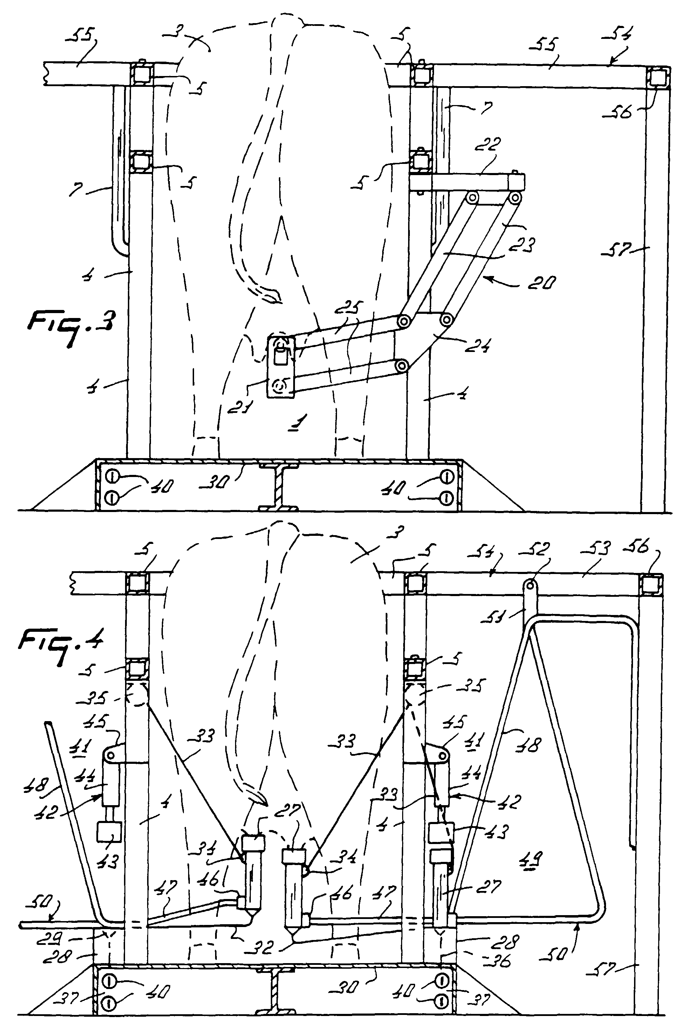

Figure 1 shows a plan view of a milking parlour 1 with a fencing 2 enclosing an animal 3, a cow in the present case. As is depicted in Figure 2, the fencing 2 comprises posts 4 and, in between the rear posts 4 and the central posts 4, cross beams 5 are placed at a certain distance from and parallel to each other. The milking parlour 1 is provided with an entrance door 6 on the rear side and exit doors 7 on the two longitudinal sides. Upon opening, the exit doors 7 connect the milking parlour 1 with one and the same room or each of them connects it with a separate room, such as e.g. an isolation room and the cowhouse. On a cross beam 5 near the front side of the milking parlour 1 there is also provided a feed trough 8, wherein the animal 3 can be given concentrates. For identification of the animal 3, round the neck of the animal there is provided a collar 9 with a transmitter 10, which operates in conjunction with a (non-shown) cow recognition system.

In the vicinity of the milking parlour 1 there is furthermore provided a milking robot 11, which comprises a robot arm 12 on each longitudinal side of the milking parlour 1. The robot arm 12 is via a support 14 connected with a rear post 4 by means of a parallelogram-type hinged arm construction 13. The supports 14 are disposed transversely to the longitudinal direction of the milking parlour 1 on the rear posts 4. The robot arm 12 is capable of being moved vertically by means of a (non-shown) cylinder. The robot arm 12 comprises a first arm part 15 and a second arm part 17 capable of pivoting about a vertical shaft 16. On the end of the first arm part 15 there is provided a gripper 19 capable of rotating about a vertical shaft 18. On one longitudinal side of the milking parlour 1 there is provided a further robot arm 20 equipped with a detector 21 for finding the teat positions of the animal 3. The further robot arm 20 comprises a first parallelogram-type hinged arm construction 22 which is in a virtually horizontal position and which has one end connected with a cross beam 5 of the fencing 2 of the milking parlour 1 (Figure 1). Approximately perpendicular to the first horizontal parallelogram-type hinged arm construction 22 there is provided a second parallelogram-type hinged arm construction 23 extending in a downward direction and situated in a vertical plane. The other end of the second vertical parallelogram-type hinged arm construction 23 is connected with a triangular plate 24. On a different side of the triangular plate 24 there is provided a third parallelogram-type hinged arm construction 25, whose arms extend essentially horizontally and are situated in a vertical plane which is perpendicular to the milking parlour 1. On the other end of the third parallelogram-type hinged arm construction 25 there is provided a support 26, which is situated in the longitudinal direction of the milking parlour 1 and to which the detector 21 is attached. In the present exemplary embodiment of the invention, the detector 21 comprises a laser. The first, second and third parallelogram-type hinged arm constructions are capable of being operated by preferably pneumatic cylinders (not shown).

Further, the milking robot 11 is equipped with four teat cups 27, which are arranged on a teat cup carrier 28 in pairs on both sides of the milking parlour 1 when the milking robot 11 is out of operation (Figure 1). The teat cup carrier or holder 28 is provided with a conical seating 29 corresponding with the lowermost conical part of the teat cup 27. In the present exemplary embodiment, on the two longitudinal sides of the milking parlour 1 there is provided on the floor 30 beside the milking parlour 1 a holder 28 having two conical recesses or seatings 29 situated behind each other as seen in the longitudinal direction of the milking parlour 1.

Each teat cup 27 is further provided with means of transport 31, with the aid of which the respective teat cup 27 is kept continuously or virtually continuously in an approximately vertical position during the movement of the teat cup 27 to the teat cup carrier 28 and during the disconnection of the teat cup 27 from the teat. As Figure 4 shows, the means of transport 31 comprise a cable 32 extending essentially horizontally and a cable 33 extending essentially vertically. The vertical cable 33 has one end connected with a cable fastening 34, which is disposed near the top side on the shell of the teat cup 27. The other end of the vertical cable 33 is connected with a cable fastening 35, which is disposed on a cross beam 5 of the fencing 2. The cable fastening 35 is a cylindrical body, which also constitutes a guide for the end of the vertical cable 33. The length of the vertical cable 33 is dimensioned such that the upper part of the teat cup 27 cannot come into contact with the floor 30 of the milking parlour 1. In the conical part on the underside of the teat cup 27 there is provided a cable fastening, by means of which one end of the horizontal cable 32 is connected with the teat cup 27. As is shown in Figure 2, the horizontal cable 32 passes through a hole in the teat cup carrier 28. The hole has a first vertical part 36 provided in the centre of the conical seating 29 and, perpendicular thereto, a second part 37 extending in the longitudinal direction of the milking parlour 1. In the transition area between the vertical part 36 and the horizontal part 37 there is provided a roller member 38, which supports the horizontal cable 32. The two horizontal cables 32 of one pair of teat cups 27 leave the teat cup carrier 28 approximately parallel to each other and extend in the longitudinal direction of the milking parlour 1 to the withdrawing members 39. In the present exemplary embodiment of the invention, the withdrawing members 39 are designed as pneumatic cylinders, but they may also be designed as hydraulic cylinders or electric equivalents of cylinders. On each longitudinal side of the milking parlour 1, in the exemplary embodiment of the invention, there are provided two pneumatic cylinders 40 above each other and parallel to each other. The end of each piston rod of a pneumatic cylinder 40 comprises a cable fastening, to which the horizontal cable 32 is attached (Figure 2).

The milking parlour 1 of the present exemplary embodiment of the invention is also provided with a cleaning implement 41 for cleaning the teat cups 27. The cleaning implement 41 comprises two pairs of teat cup cleaners 42 which are disposed on either side of the milking parlour 1. A teat cup cleaner 42 comprises a spray head 43 placed on the piston rod of a pneumatic cylinder 44, which cylinder 44 has its other end connected with the fencing 2 of the milking parlour 1 through a lug 45. The pneumatic cylinder 44 is capable of being operated by a (non-shown) computer, the arrangement being such that the spray head 43 is connected to a teat cup 27, which is located on the teat cup carrier 28 during a condition of rest. A cleaning and/or disinfecting liquid can be sprayed into or along the teat cup 27 by the spray head 43.

The teat cups 27 are further provided with a computer-controlled three-way cock 46, to which for each teat cup 27 two lines 47 for the discharge of milk are connected. The teat cup 27 further comprises a pulsation tube 48. The milk lines 47 and the pulsation line 48 extend virtually horizontally from a teat cup 27 to a side of the milking parlour 1. Just out of the milking parlour 1, the milk tubes 47 and the pulsation tube 48 are bent upwards such that the tubes can form a triangle 49, such as an isosceles triangle. In the present exemplary embodiment, the isosceles triangle 49 is formed by arranging the milk lines 47 and the pulsation line 48 in a U-section 50 bent into the shape of an isosceles triangle 49. The U-section 50 is on its top provided with a strip 51, of which the other end is rotatable on a horizontal pivot 52 disposed in the longitudinal direction of the milking parlour 1. The strip 51 is mounted on a beam 53 which, in turn, is mounted perpendicularly to the cross beam 5 of the fencing 2. The beam 53 is part of a U-shaped secondary fencing 54, which is connected with the fencing 2 of the milking parlour 1. As is depicted in Figure 1, the U-shaped secondary fencing 54 comprises two beams 55 mounted perpendicularly to the posts 4 and interconnected by means of a cross beam 56 on the other end. The beams 55 and the cross beam 56 are supported at the angular points by two posts 57. The U-shaped secondary fencing 54 extends from the entrance door 6 to approximately the exit doors 7.

The operation of the construction comprising the implement for milking animals as set forth hereinbefore is as follows:

After an animal 3 has entered the milking parlour 1 through the entrance door 6, the animal 3 is automatically identified by the cow recognition system by means of a transmitter 10. After the animal 3 has been identified by the cow recognition system, an amount of concentrates may be supplied to the animal 3 in the feed trough 8. Subsequently, by means of a (non-shown) computer, the robot arm 20 with the laser detector 21 thereon is swung to underneath the animal 3 and, by means of the laser detector 21, the positions of the teats of the animal 3 are determined and applied to the computer. Then the computer issues one or more signals to the two robot arms 12 which are disposed on the longitudinal side of the milking parlour 1 and which, acting on the basis of these signals, put the grippers 19 with the curved recess to close to a shell of the teat cup 27. In the present exemplary embodiment of the invention, first, the teat cups 27 to be connected to the hind teats of the animal 3 to be milked are seized. Even before the curved recess of a gripper 19 comes near the shell of a teat cup 27, the computer issues a signal to the electromagnet of the gripper 19 so as to produce an electromagnetic field in the vicinity of the curved recess of the gripper 19. When the gripper 19 has approached the metal shell of the teat cup 27 to a sufficient distance, the teat cup 27 is firmly drawn against the curved recess of the gripper 19 owing to the presence of the electromagnetic field. A change in the electromagnetic field is caused by the metal shell, whereupon a signal is issued to the computer, signifying that the teat cup 27 has been coupled. The last-mentioned signal can also be issued by a different type of sensor, such as a contact sensor which is disposed in the gripper 19, or by means of a position determination through the detector 21.

The computer then issues a signal to the means of transport 31 of the relevant teat cup 27, which means release the pneumatic cylinders 40 on account of this signal, the arrangement being such that the teat cup 27 can be lifted from the conical seating 29 of the teat cup carrier 28 by means of the robot arm 12 without being obstructed by the horizontal cable 32. Subsequently, the teat cup 27 is moved horizontally to underneath a hind teat of the animal 3. When the teat cup 27 is moving to the teat, the vertical cable 33 swings along with the teat cup 27 and the horizontal cable 32 is also carried along. By means of the gripper 19, the teat cup 27 is then connected to the teat of an animal 3 to be milked. Even before the commencement of foremilking, the computer issues a signal to the computer-controlled three-way cock 46, as a result of which the relevant teat cup 27 is put into communication with the milk line 47 for the discharge of foremilk. The foremilk is discharged into a (non-shown) tank via the milk line 47. After it has been established by means of a (non-shown) flow sensor that a number of squirts of foremilk has been obtained through the teat cup 27, the foremilking is interrupted and the relevant teat cup 27 is disconnected and moved towards the teat cup carrier 28 with the aid of the means of transport 31. When the teat cup 27 has been drawn into the conical seating 29, the computer issues a signal to the cleaning implement 41, whereupon the pneumatic cylinder 40 is energized and the spray head 43 is connected to the teat cup 27, after which it is possible to start cleaning the teat cup 27 and possibly the milk line 47. After the teat cup 27 has been cleaned, the computer issues a signal to the computer-controlled three-way cock 46 so as to connect the teat cup to the milk line 47 for the discharge of the milk suitable for consumption. Subsequently, the teat cup is connected in the afore-mentioned manner to the teat of the animal 3 to be milked by means of the robot arm 12, whereupon the milking can be started. After it has been established by means of the flow sensor that an udder quarter is empty, the teat cup 27 is drawn back to the teat cup carrier 28 with the aid of the means of transport 31. After this, the computer again issues a signal in order that the teat cup cleaner 42 again cleans the relevant teat cup 27 before it is connected again to a teat of an animal to be milked. Accordingly, the invention comprises an implement for milking animals, such as cows, using one or more milking robots, one or more milking parlours, a computer and a cleaning implement for cleaning the teat cups, characterized in that, after a teat cup has been connected to a teat and milking has taken place for a certain duration of time, the computer issues a first signal to the cleaning implement in order that the cleaning implement is cleaned, while the computer issues a second signal when the milking with the relevant teat cup has been terminated, whereupon the relevant teat cup is cleaned again. In another (non-shown) exemplary embodiment of the invention, it is possible that the implement for foremilking comprises a timing device included in the computer, which timing device defines a time interval for obtaining the foremilk. Owing to the fact that the milk tubes 47 and the pulsation tubes 48 are hinge-mounted, the animal 3 can freely move in the milking parlour 1 when the teat cups 27 are connected and during the (fore)milking without there being a risk that a teat cup 27 is undesiredly uncoupled from the teat.

## Claims

1. A method of milking animals, such as cows, whereby, by means of a milking robot (11), at least one teat cup (27) is connected to a teat of an animal to be milked, characterized in that, after foremilking, the teat cup (27) is cleaned.

2. A method according to claim 1, characterized in that, after foremilking, the teat cup (27) is disconnected and cleaned, whereupon the teat cup (27) is reconnected to the teat and the corresponding udder quarter is milked out, after which the teat cup (27) is cleaned again.

3. A method according to claim 1 or 2, characterized in that the teat cup (27) is cleaned immediately upon termination of the milking.

4. A method according to claim 1 to 3, characterized in that the foremilk and the milk suitable for consumption are discharged into separate tanks.

## Patentansprüche

1. Verfahren zum Melken von Tieren, wie z. B. Kühen, bei dem mittels eines Melkroboters (11) mindestens ein Zitzenbecher (27) an eine Zitze eines zu melkenden Tieres angeschlossen wird,
dadurch gekennzeichnet, daß der Zitzenbecher (27) nach dem Vormelken gereinigt wird.

2. Verfahren nach Anspruch 1,
dadurch gekennzeichnet, daß der Zitzenbecher (27) nach dem Vormelken abgenommen und gereinigt wird, worauf der Zitzenbecher (27) wieder an die Zitze angeschlossen und das entsprechende Euterviertel ausgemolken wird, wonach der Zitzenbecher (27) erneut gereinigt wird.

3. Verfahren nach Anspruch 1 oder 2,
dadurch gekennzeichnet, daß der Zitzenbecher (27) sofort nach Beendigung des Melkvorganges gereinigt wird.

4. Verfahren nach Anspruch 1 bis 3,
dadurch gekennzeichnet, daß das Vorgemelk und die zum Verzehr geeignete Milch in getrennte Behälter abgeführt werden.

## Revendications

1. Procédé de traite d'animaux, tels que des vaches, par lequel, par l'intermédiaire d'un robot de traite (11), au moins un gobelet trayeur (27) est connecté à un trayon d'un animal à traire, caractérisé en ce que, après la traite du premier lait, le gobelet trayeur (27) est nettoyé.

2. Procédé selon la revendication 1, caractérisé en ce que, après la traite du premier lait, le gobelet trayeur (27) est déconnecté et nettoyé, après quoi le gobelet trayeur (27) est reconnecté au trayon et le quart de pis correspondant est trait jusqu'à épuisement après quoi le gobelet trayeur (27) est nettoyé à nouveau.

3. Procédé selon la revendication 1 ou 2, caractérisé en ce que le gobelet trayeur (27) est nettoyé immédiatement après la fin de la traite.

4. Procédé selon l'une quelconque des revendications 1 à 3, caractérisé en ce que le premier lait et le lait propre à la consommation sont déversés dans des réservoirs séparés.
